(19) Europäisches Patentamt
European Patent Office
Office européen des brevets

(11) **EP 3 377 455 B1**

(12) **EUROPEAN PATENT SPECIFICATION**

(45) Date of publication and mention
of the grant of the patent:
**29.01.2020 Bulletin 2020/05**

(51) Int Cl.:
***C03C 23/00*** (2006.01)          ***B32B 7/06*** (2019.01)
***B32B 17/06*** (2006.01)          ***C03C 27/06*** (2006.01)

(21) Application number: **16806404.6**

(22) Date of filing: **18.11.2016**

(86) International application number:
**PCT/US2016/062668**

(87) International publication number:
**WO 2017/087745 (26.05.2017 Gazette 2017/21)**

(54) **GLASS ARTICLES AND METHODS FOR BONDING GLASS SHEETS WITH CARRIERS**

GLASARTIKEL UND VERFAHREN ZUM VERBINDEN VON GLASSCHEIBEN MIT TRÄGERN

ARTICLES EN VERRE ET PROCÉDÉS DE LIAISON DE FEUILLES DE VERRE À DES SUPPORTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2015 US 201562257466 P**

(43) Date of publication of application:
**26.09.2018 Bulletin 2018/39**

(73) Proprietor: **Corning Incorporated
Corning, New York 14831 (US)**

(72) Inventors:
• **ADIB, Kaveh
Corning, New York 14830 (US)**
• **CHANG, Theresa
Painted Post, New York 14870 (US)**
• **LI, Cheng-Chung
Painted Post, New York 14870 (US)**
• **LIN, Jen-Chieh
Hsinchu County
Zhubei City 302 (TW)**
• **MAZUMDER, Prantik
Ithaca, New York 14850 (US)**
• **TSENG, Pei-Lien
HsinChu
Chutung 310 (TW)**

(74) Representative: **Elkington and Fife LLP
Prospect House
8 Pembroke Road
Sevenoaks, Kent TN13 1XR (GB)**

(56) References cited:
WO-A1-2014/137801    WO-A1-2014/201665
US-A1- 2005 136 625    US-A1- 2014 150 244
US-A1- 2015 099 110    US-A1- 2015 140 705

**Description**

**FIELD**

The present disclosure relates generally to articles and methods for processing sheets on substrates and, more particularly, to articles and methods for processing flexible glass sheets on glass carriers.

BACKGROUND

Thin-film transistor (TFT) products or touch sensor based devices may utilize glass as a substrate. The thickness of the glass substrate constricts the overall weight and flexibility of TFTs devices. As such, there is a growing interest to manufacture portable electronic devices that are thinner and lighter in weight. From a cost perspective, it would be desirable for manufacturers to use currently installed processing equipment to fabricate thinner, lighter, or more flexible devices.

Typical routes to make the overall display thinner, lighter, or more flexible utilize glass etching processes. Etching processes are effective to thin substrates, however it is desirable to fabricate TFT devices directly on a thin substrate, and thus eliminate the step of thinning. To adapt to a thin and flexible glass substrate for use on existing equipment, TFT-based devices, for example display devices, can be manufactured using a glass carrier laminated to one or more thin glass substrates. Because manufacturing processes can expose the laminated substrate-carrier article to high temperatures, for instance up to 400 degrees Celsius (400°C), and therefore promote permanent bonding of the layers or decomposition of materials, it is desirable that the laminated thin glass substrate be removable or debondable from the carrier. After fabrication, the separated carrier can be reusable to save on manufacturing costs.

Therefore, there is a need to develop an article having a thin glass sheet temporarily bonded to a carrier suitable for use by display panel and touch sensor makers. The bonding strength between the thin glass sheet and the carrier should be adequate to maintain lamination through the entire device fabrication process but still allow the glass sheet and carrier to be separated, without breaking, after device fabrication and extraction processes. WO 2014/137801 A1 relates to compositions and methods for a temporary adhesive with adjustable adhesion force to affix a thin solid material onto a carrier.

US 2015/099100 A1 relates to surface modification layers and associated heat treatments, that may be provided on a sheet, a carrier, or both, to control both room-temperature van der Waals (and/or hydrogen) bonding and high temperature covalent bonding between the thin sheet and carrier.

SUMMARY

In light of the above, there is a need for a thin sheet and substrate article that can withstand the rigors of high temperature processing, yet allow the entire area of the thin sheet to be removed (either all at once, or in sections), without breaking, from the substrate. The substrate may then be used for processing another thin sheet. The present specification describes methods to control the adhesion between the substrate and the thin sheet to create a temporary bond sufficiently strong to survive high temperature processing but weak enough to permit debonding of the sheet from the substrate, without breaking at least the sheet and, preferably without breaking either the sheet or the substrate. Such controlled bonding can be utilized to create an article having a re-usable substrate, or alternately an article having patterned areas of controlled bonding and covalent bonding between a substrate and a sheet. More specifically, the present disclosure provides a substrate, sheet or both comprising a residual material disposed thereon that may be provided by washing the substrate or sheet with a detergent, prior to bonding, to control both room-temperature van der Waals, and/or hydrogen, bonding and high temperature covalent bonding between the thin sheet and carrier. Even more specifically, the room-temperature bonding may be controlled so as to be sufficient to hold the thin sheet and carrier together during vacuum processing, wet processing, and/or ultrasonic cleaning processing. And at the same time, the high temperature covalent bonding may be controlled so as to prevent a permanent bond between the thin sheet and substrate during high temperature processing such that the thin sheet can be separated from the substrate without breaking the thinner of the substrate and the thin sheet into two or more pieces, as well as maintain a sufficient bond to prevent delamination of the thin sheet and the substrate during high temperature processing. In some examples, when two pieces of glass are permanently bonded to one another, they act as a monolith.

It is to be understood that various features disclosed in this specification and in the drawings can be used in any and all combinations. By way of non-limiting example, the various features may be combined with one another as set forth in the following aspects.

In a first aspect, there is a glass article comprising:

a glass substrate having a substrate bonding surface;

a glass sheet having a sheet bonding surface;
a surfactant disposed between the substrate bonding surface and the sheet bonding surface;
the sheet bonding surface being non-permanently bonded to the substrate bonding surface such that the sheet may be separated from the substrate without breaking the sheet into two or more pieces, wherein the separation bonding energy between the sheet bonding surface and the substrate bonding surface is less than 800 mJ/m$^2$ (milli-Joules per square meter) after the glass article is subjected to an aging period of 30 days at 60° C and then to a baking period of 2 hours at 300° C in air wherein the surfactant comprises a compound selected from the group consisting of diethanolamide, coconut diethanolamide, polyethylene glycols, 4-nonylphenyl-polyethylene glycol, bisphenol A ethoxylate, octoxynol-9, oxtylphenol ethoxylate and mixtures thereof.

In an example of aspect 1, the separation bonding energy between the sheet bonding surface and the substrate bonding surface is equal to or less than about 600mJ/m$^2$.

In another example of aspect 1, the separation bonding energy between the sheet bonding surface and the substrate bonding surface is equal to or less than 400 mJ/m$^2$.

In another example of aspect 1, the sheet is a glass sheet having a thickness equal to or less than 300 microns.

In another example of aspect 1, a thickness of the substrate is greater than or equal to the thickness of the sheet.

In another example of aspect 1, the substrate bonding surface after drying and prior to the substrate being bonded with the sheet comprises an atomic ratio of oxygen to silicon in the range of 2.5 to 3.5, an atomic ratio of silicon to carbon in the range of 4 to 5 and an atomic ratio of oxygen to carbon in the range of 12 to 14.

The first aspect may be provided alone or in combination with any one or more of the examples of the first aspect discussed above.

In a first aspect of the disclosure, there is described a glass article of aspect 1, the glass article further comprising residue from a Standard Clean 1 cleaning process disposed between the substrate bonding surface and the sheet bonding surface prior to bonding the sheet bonding surface to the substrate bonding surface.

In an example of the first aspect of the disclosure, the substrate bonding surface prior to the substrate being bonded with the sheet comprises an atomic ratio of oxygen to silicon in the range of 2.5 to 3.5, an atomic ratio of silicon to carbon in the range of 4 to 5 and an atomic ratio of oxygen to carbon in the range of 12 to 14.

In another example of the first aspect of the disclosure, the article further comprises a detergent residue disposed between the substrate bonding surface and the sheet bonding surface, wherein the detergent residue can contain a compound selected from the group consisting of diethanolamide, polyethylene glycols, 4-nonylphenyl-polyethylene glycol, bisphenol A ethoxylate, octoxynol-9, oxtylphenol ethoxylate and mixtures thereof.

In another example of the first aspect of the disclosure, the surfactant can be selected from the group consisting of diethanolamide, polyethylene glycols, 4-nonylphenyl-polyethylene glycol, bisphenol A ethoxylate, octoxynol-9, oxtylphenol ethoxylate and mixtures thereof.

The first aspect of the disclosure may be provided alone or in combination with any one or more of the examples of the second aspect discussed above.

In a second aspect of the disclosure, there is described a glass article comprising:

a substrate having a substrate bonding surface;
a sheet having a sheet bonding surface;
a surfactant disposed between the substrate bonding surface and the sheet bonding surface;
the sheet bonding surface being non-permanently bonded to the substrate bonding surface such that the sheet may be separated from the substrate without breaking the sheet into two or more pieces, wherein the separation bonding energy between the sheet bonding surface and the substrate bonding surface is less than 400 mJ/m$^2$ (milli-Joules per square meter) after holding the glass article in an oven at a temperature of 500° C for 10 minutes in an air atmosphere.

In an example of the second aspect of the disclosure, the as-deposited surface energy of a surfactant bonding surface formed by the surfactant being disposed on the substrate is between about 65 mJ/m$^2$ and 74 mJ/m$^2$.

In another example of the second aspect of the disclosure, the surfactant being a compound selected from the group consisting of diethanolamide, coconut diethanolamide, polyethylene glycols, 4-nonylphenyl-polyethylene glycol, and mixtures thereof.

In another example of the second aspect of the disclosure, the separation bonding energy between the sheet bonding surface and the substrate bonding surface is equal to or less than 350 mJ/m$^2$ after holding the glass article in an oven at a temperature of 300° C to 500° C for 10 minutes in an air atmosphere.

In another example of the second aspect of the disclosure, the separation bonding energy between the sheet bonding surface and the substrate bonding surface is equal to or less than 250 mJ/m$^2$ after holding the glass article in an oven at a temperature of in the range of 200° C to 300° C for period of time in the range of 20 minutes to 2.5 hours in an air atmosphere, wherein the glass article can be subjected to a pre-treatment step prior to holding the glass article in the oven, the pre-treatment step includes heating the glass article to a temperature in the range of 100° to 250° C and holding the article in this temperature range for a period of 10 to 30 minutes.

In another example of the second aspect of the disclosure, the change in percent bubble area of the surfactant is less than or equal to about 5 percent according to Outgassing Test #1 after holding the article in an oven at a temperature of 350 °C for 120 minutes in a nitrogen atmosphere.

In another example of the second aspect of the disclosure, the glass article further includes a residue from a Standard Clean 1 cleaning process disposed between the substrate bonding surface and the sheet bonding surface.

The second aspect of the disclosure may be provided alone or in combination with any one or more of the examples of the third aspect discussed above.

In a third aspect of the disclosure, a method of making a glass article is described comprising:

cleaning a bonding surface of a substrate and/or a sheet with a surfactant solution;
drying the bonding surface of the substrate and/or the bonding surface of the sheet and/or substrate and;
non-permanently bonding the substrate bonding surface to the sheet bonding surface such that the sheet may be separated from the substrate without breaking the sheet into two or more pieces, and such that the separation bonding energy between the sheet bonding surface and the substrate bonding surface is less than about 800 mJ/m$^2$ after the glass article is subjected to an aging period of 30 days at 60° C and then a baking period of 2 hours at 300° C in air.

In an example of the third aspect of the disclosure, the substrate bonding surface and the sheet bonding surface are in contact with a surfactant solution.

In an example of the third aspect of the disclosure, the surfactant solution is a detergent containing a surfactant.

In another example of the third aspect of the disclosure, the cleaning comprises cleaning the substrate bonding surface with a surfactant solution and the sheet bonding surface with a Standard Clean 1 process prior to bonding the substrate bonding surface to the sheet bonding surface.

In another example of the third aspect of the disclosure, the sheet is a glass sheet comprising a thickness equal to or less than about 300 micrometers.

In another example of aspect 4, the substrate comprises a thickness greater than the thickness of the sheet.

In another example of the third aspect of the disclosure, the substrate is a glass substrate.

In another example of the third aspect of the disclosure, the substrate bonding surface after the drying and prior to bonding the substrate with the sheet comprises an atomic ratio of oxygen to silicon in the range of 2.5 to 3.5, an atomic ratio of silicon to carbon in the range of 4 to 5 and an atomic ratio of oxygen to carbon in the range of 12 to 14.

In another example of the third aspect of the disclosure, the drying comprises drying the bonding surface of the substrate and the bonding surface of the sheet for a period of at least about 15 minutes at a temperature equal to or greater than about 85° C.

In another example of the third aspect of the disclosure, the drying comprises drying the bonding surface of the substrate and the bonding surface of the sheet for a period of at least about 15 minutes at a temperature of at least about 110° C.

In another example of the third aspect of the disclosure, the drying comprises convectively drying the bonding surface of the substrate and the bonding surface of the sheet.

In another example of the third aspect of the disclosure, the drying comprises drying, in a convective oven, the bonding surface of the substrate and the bonding surface of the sheet.

In another example of the third aspect of the disclosure, the drying comprises drying the bonding surface of the substrate and the bonding surface of the sheet for a period of at least about 30 minutes at a temperature equal to or greater than about 85° C.

In another example of the third aspect of the disclosure, the drying comprises convectively drying the bonding surface of the substrate and the bonding surface of the sheet.

The third aspect of the disclosure may be provided alone or in combination with any one or more of the examples of the third aspect discussed above.

The accompanying drawings are included to provide a further understanding of the principles described herein, and are incorporated in and constitute a part of this specification. The drawings illustrate one or more aspects or embodiment(s), and together with the description serve to explain, by way of example, principles and operation of those aspects or embodiments.

## BRIEF DESCRIPTION OF THE DRAWINGS

The above description and other features, aspects and advantages are better understood when the following detailed description is read with reference to the accompanying drawings, in which:

> **FIG. 1** is a schematic side view of an article having a substrate bonded to a sheet with detergent residue therebetween.
> **FIG. 2** is an exploded and partially cut-away view of the article in **FIG. 1.**
> **FIG. 3** is a graph of the bond energy for thin glass bonded to a substrate wherein the thin glass, substrate or both were washed with a detergent prior to bonding the thin glass to the substrate.
> **FIG. 4** is a chart of the atomic ratio of elements as measured from the substrate bonding surface of the dried substrate prior to the substrate being bonded with the sheet.

## DETAILED DESCRIPTION

In the following detailed description, for purposes of explanation and not limitation, example embodiments disclosing specific details are set forth to provide a thorough understanding of various principles and aspects of the present disclosure. However, it will be apparent to one having ordinary skill in the art, having had the benefit of the present disclosure, that embodiments described in the present disclosure may be practiced in other embodiments that depart from the specific details disclosed herein. Moreover, descriptions of well-known devices, methods and materials may be omitted so as not to obscure the description of various principles set forth herein. Finally, wherever applicable, like reference numerals refer to like elements.

Directional terms as used herein (e.g., up, down, right left, front, back, top, bottom) are made only with reference to the figures as drawn and are not intended to imply absolute orientation.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Provided are solutions for processing a sheet of material on a substrate, for example a glass sheet, whereby at least portions of the sheet remain "controllably bonded" with the substrate, for example a carrier, so that devices processed on the sheet may be removed from a substrate, which can be reused and bonded to another or second sheet. In order to maintain advantageous surface shape characteristics, the substrate is typically glass, for example, a display grade glass substrate. Accordingly, in some situations, it is wasteful and expensive to merely dispose of the substrate after one use. To reduce costs of display manufacture, it is desirable to be able to reuse the substrate to process more than one sheet. Accordingly, the present disclosure sets forth articles and methods that enable a sheet to be processed through the high temperature or harsh environment of the processing lines, and yet still allow the sheet to be easily removed from the substrate without damage (for example, wherein one of the substrate and sheet breaks or cracks into two or more pieces) to the sheet or substrate, and whereby the substrate may be reused. For example, high temperature processing may include processing at a temperature equal to or greater than about 300° C, and may vary depending upon the type of device being made. For example, high temperature processing as used herein may include temperatures up to about 350° C, about 400° C, about 450° C, or about 500° C.

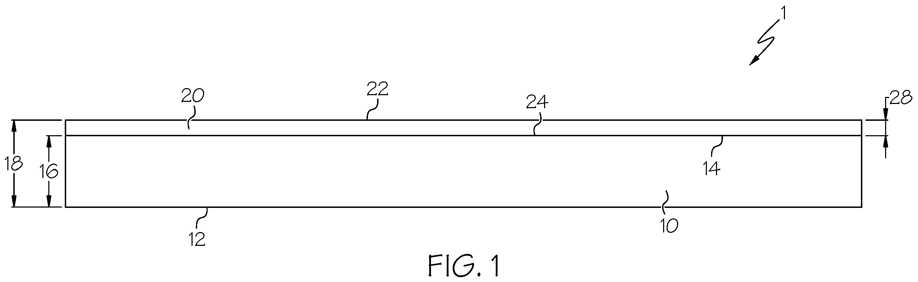

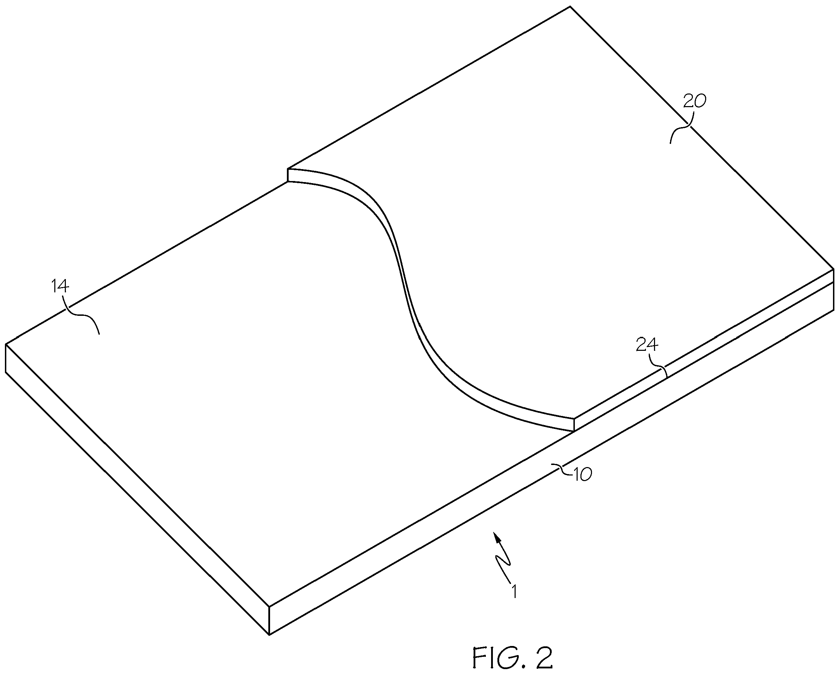

As shown in FIGS. 1 and 2, a glass article 1 has a thickness 18, and includes a sheet 20 (e.g., thin glass sheet, for example, a thin glass sheet having a thickness 28 equal to or less than about 300 microns, including but not limited to thicknesses in a range from about 10 micrometers to about 50 micrometers, from, about 50 micrometers to about 100 micrometers, from about 100 micrometers to about 150 micrometers, from about 150 micrometers to about 300 micrometers, for example 300, 250, 200 190, 180, 170, 160, 150 140, 130, 120 110 100, 90, 80, 70, 60, 50, 40 30, 20, or 10, micrometers), and a substrate 10 (e.g., a carrier) having a thickness 16.

The glass article 1 is arranged to allow the processing of sheet 20 in equipment designed for thicker sheets, for example, those on the order of greater than or equal to about 0.4 millimeters (mm), for example 0.4 mm, 0.5 mm, 0.6 mm, 0.7 mm, 0.8 mm, 0.9 mm, 1.0 mm, 1.1 mm, 1.2 mm or more than 1.2 mm, although the sheet 20 itself is equal to or less than about 300 micrometers. The thickness 18, which is the sum of thicknesses 16 and 28, can be equivalent to that of the thicker sheet for which a piece of equipment, for example, equipment designed to deposit electronic device components onto sheets, was designed to process. In an example, if the processing equipment was designed for a 700 micrometer thick sheet, and the sheet had an actual thickness 28 of 300 micrometers, then thickness 16 would be selected as 400 micrometers, assuming any residual surfactant on sheet 20 and/or substrate 10 is negligible. That is, residual surfactant on the sheet 20 or substrate 10 can be a layer but does not impart noticeable additional thickness although being disposed between the surfaces. The surfactant can be disposed uniformly over the bonding surface 14 (and/or surface 24) when providing a reusable substrate. The presence of a residual surfactant may be detected by surface chemistry analysis, for example by time-of-flight secondary ion mass spectrometry (ToF Sims). As described herein, residual surfactant or surfactant layer on a bonding surface (e.g., 14, 24) provides negligible thickness to the sheet or substrate.

Substrate 10 has a first surface 12 and a bonding surface 14. The substrate 10 may be of any suitable material including glass. The substrate 10 may be of any suitable composition including alumino-silicate, boro-silicate, alumino-boro-silicate, soda-lime-silicate (i.e. soda-lime), and may be either alkali containing, for example, Gorilla® glass, or alkali-free (e.g., display grade glass) depending upon its ultimate application. In some examples, the substrate 10 may include silicon, for example, a silicon wafer. Thickness 16 may be from about 0.2 to 3 mm, or greater, for example 0.2, 0.3, 0.4, 0.5, 0.6, 0.65, 0.7, 1.0, 1.5, 2.0, 2.5 or 3 mm, or greater, and will depend upon the thickness 28, and residual surfactant when such is non-negligible, as noted above. In some embodiments, the substrate 10 may be made of one layer, as shown, or multiple layers (including multiple thin sheets) that are bonded together (either permanently or non-permanently). Further, the substrate may be of a Gen 1 size or larger, for example, Gen 2, Gen 3, Gen 4, Gen 5, Gen 8 or larger (e.g., sheet sizes from 100 mm × 100 mm to 3 meters × 3 meters or greater). The substrate 10 can have an outer diameter or area less than, equal to or greater than the sheet 20.

The sheet 20 has a first surface 22, and a bonding surface 24, which bonds to the substrate bonding surface 14. The bond between the bonding surfaces is affected by the presence of residual surfactant, for example, on either bonding surface prior to bonding the sheet and the substrate together. The bond between the bonding surfaces can also be affected by residual detergent and/or SC1 residue. Perimeters of the substrate and sheet may be of any suitable shape, may be the same as one another, or may be different from one another as noted above. Further, the sheet 20 may be of any suitable material including glass, ceramic, glass-ceramic, or metal. As described above for the substrate 10, sheet 20 may be of any suitable composition, including alumino-silicate, boro-silicate, alumino-boro-silicate, soda-lime-silicate, and may be either alkali containing, for example, Gorilla® glass, or alkali free (for example display grade glass) depending upon its ultimate application. In one example, sheet 20 can be a glass cover for an electronic device (e.g., a handheld device). In some examples, the thin sheet 20 may include silicon, for example a silicon wafer. The coefficient of thermal expansion of the thin sheet 20 can be substantially the same as that of the substrate 10 to reduce warping of the article during processing at elevated temperatures. The thickness 28 of the sheet 20 is 300 micrometers or less, as noted above. Further, the sheet may be of a Gen 1 size or larger, for example, Gen 2, Gen 3, Gen 4, Gen 5, Gen 8 or larger (e.g., sheet sizes from 100 mm × 100 mm to 3 meters × 3 meters or greater).

The glass article 1 can have a thickness that accommodates processing with existing equipment and, likewise, it can survive the harsh environment in which the processing takes place. For example, processing may include wet ultrasonic, vacuum, and high temperature (e.g., $\geq 220°$ C , $\geq 250°$ C , $\geq 300°$ C), processing for conventional time periods, for instance, 10 minutes to 4 hours, 20 minutes to 2.5 hours, 30 minutes to 2 hours or 60 to 90 minutes. In one process, the processing can include a deposition or vacuum deposition that applies a coating (e.g., a protective coating, a scratch-resistant coating) to sheet 20, for example, the sheet 20 surface 22 opposite its bonding surface 24. In one example, the article can be subjected to a vacuum deposition sputtering process at a temperature in the range of 200 to 300° C. For some processes, as noted above, the temperature may be $\geq 300°$ C, $\geq 350°$ C, $\geq 400°$ C, $\geq 450°$ C, and up to 500° C. Arrangement of the glass article during processing can include any suitable variation, for example, the article can be laid flat in a horizontal position or placed in a vertical or substantially vertical orientation.

To survive the harsh environment in which article 1 will be processed, the bonding surface 14 should be bonded to bonding surface 24 with sufficient strength so that the sheet 20 does not separate from substrate 10. And this strength should be maintained throughout the high temperature processing so that sheet 20 does not separate from substrate 10 during processing. Further, to allow sheet 20 to be removed from substrate 10 (e.g., so that substrate 10 may be reused), the bonding surface 14 should not be bonded to bonding surface 24 too strongly either by the initially designed bonding force, and/or by a bonding force that results from a modification of the initially designed bonding force as may occur, for example, when the article undergoes processing at high temperatures, e.g., temperatures of $\geq 300°$ C to $\geq 500°$ C, or when the article ages. The presence of a surfactant may be used to control the strength of bonding between bonding surface 14 and bonding surface 24 so as to achieve both of these objectives, for example, either one or both of bonding surfaces 14, 24 can have surfactant present thereon prior to the sheet 20 and the substrate 10 being bonded together to form the glass article 1. The controlled bonding force is achieved by controlling the contributions of van der Waals (and/or hydrogen bonding) and covalent attractive energies to the total adhesion energy, which is controlled by modulating the polar and non-polar surface energy components of sheet 20 and substrate 10. This controlled bonding is strong enough to survive processing, for instance, including temperatures equal to or greater than about 300° C, and in some instances, processing temperatures of equal to or greater than about 300° C, equal to or greater than about 350° C, equal to or greater than 400° C, equal to or greater than about 450° C, and up to about 500° C, and remain de-bondable by application of a force sufficient to separate the sheets but not to cause significant damage to sheet 20 and/or substrate 10. For example, the force should not break either the sheet 20 or substrate 10. Such de-bonding permits removal of sheet 20 and the devices fabricated thereon, for example TFT devices, from substrate 10, and also allows re-use of substrate 10 as a carrier, or for another purpose.

Surfactant present on the either bonding surface 14, 24, or both, can be uniformly deposited, for example, as deposited in a wash bath, although such a residual surfactant need not be uniform in some instances, and may not completely cover the entire portion of the bonding surfaces 14 or 24. For example, the coverage may be $\leq 100\%$, for

example from about 1% to about 100%, from about 10% to about 100%, from about 20% to about 90%, or from about 50% to about 90% of the bonding surfaces 14 or 24. The surfactant may be considered to be disposed between sheet 10 and substrate 20 even though it may not contact one or the other of sheet 10 and substrate 20. In another aspect of the surfactant layer, the surfactant modifies the ability of the bonding surface 14 to bond with bonding surface 24, thereby controlling the strength of the bond between the sheet 10 and substrate 20. The material and amount of the surfactant, as well as the treatment of the bonding surfaces 14, 24 prior to bonding, can be used to control the strength of the bond (energy of adhesion) between sheet 10 and substrate 20.

Application of the Surfactant

The sheet 20, substrate 10, or both can be cleaned or washed with a surfactant solution to apply a surfactant to bonding surface 14, 24, or both. The surfactant solution, for instance a detergent solution, may contain one or more surfactants. The surfactant is selected from diethanolamide and derivatives thereof (e.g., coconut diethanolamide), polyethylene glycols, 4-nonylphenyl-polyethylene glycol, bisphenol A ethoxylate, octoxynol-9, oxtylphenol ethoxylate and combinations thereof. The surfactant solution can include one or more surfactants in a concentrated or diluted weight percentage, e.g., one or more surfactants can be in the range of about 0.1 or 0.5 to about 99 weight percent, or in a range from about 1 to 75 weight percent, in a range from about 2 to about 50 weight percent, in a range from about 5 to about 30 weight percent, for example 8, 10, 15, 20 or 25 weight percent. The surfactant solution can further include conventional components as known in the art, such as a liquid carrier.

To apply the surfactant to the one or more bonding surfaces 14, 24, the sheet 20 and substrate 10 can be brought into contact with the surfactant solution (e.g., rinsing, immersing or dip coating, spraying, spin coating, etc.). In some embodiments, the sheet 20 and substrate 10 can be submerged or immersed in the surfactant solution. The surfactant solution can be agitated or mixed to generate movement of the surfactant solution against one or more bonding surfaces, e.g., 14, 24. To generate fluid flow in the surfactant solution, conventional mixing methods can be used. Pumps, impellers, vibration sources (e.g. ultrasonic) can be used to generate fluid flow. The sheet 20, substrate 10, or both can be in contact with the surfactant solution for a pre-determined period of time, for example, for about 1 to about 60 minutes, or at least 1, 2, 3, 5, 10, 15 or 20 minutes. It is believed that contact with the surfactant solution leads to the bonding surfaces (e.g., bonding surfaces 14, 24) becoming partially passivated with surfactant residuals from the surfactant solution and thus the formation of permanent covalent bonds (e.g., Si-O-Si) from hydroxyl groups can be minimized during bonding of the sheet 20 and substrate 10.

In some embodiments, only the sheet 20 is in contact with the surfactant solution to impart residual surfactant on the bonding surface 24 of the sheet. The substrate bonding surface 14, sheet bonding surface 24, or both can be cleaned by the Standard Clean 1 (SC1) process. Standard Clean 1 is a well-known chemical combination typically used in the semiconductor industry to clean bare glass, silicon or a silicon wafer with thermally grown or deposited oxide. The cleaning process can entail dipping the substrate into a 1:5:1 solution of ammonium hydroxide: water:3 0% hydrogen peroxide. Another example of a SC1 solution can include a 1:20:4 solution of ammonium hydroxide:DI water:30% hydrogen peroxide. The temperature of the solution can then be raised to 70° C for 10 to 30 minutes to complete the SC1 process. In some embodiments, the substrate bonding surface 14 can be in contact with the surfactant solution to impart residual surfactant on the bonding surface 14 of the substrate, wherein the sheet 20 is cleaned by the SC1 process. In yet some embodiments, both the sheet 20 and substrate 10 are brought into contact with the surfactant solution such that neither surface 14, 24 is cleaned with the SC1 process prior to bonding.

The sheet 20, substrate 10, or both can be rinsed one or more times after being in contact with the surfactant solution. The rinse liquid can be water (e.g., deionized (DI) water) and the sheet 20 and substrate can be dipped or sprayed with a rinse liquid. In some embodiments, the rinse can include a quick dump rinse of the sheet 20 or substrate 10. Multiple quick dump rinses can be used (e.g., at least 2, 3, 4 or 5 quick dump rinses).

The sheet 20 and substrate 10 can be further dried after being rinsed. For example, the bonding surfaces 14, 24 of the substrate and sheet can be air dried in ambient or heated air for a period of from about 20 minutes to about 5 hours or from about 30 minutes to about 2 hours, for example, 35, 40, 45, 50, 55 or 60 minutes, or until the bonding surfaces appear dry and free of rinse water or other liquid. In combination with air drying, or excluding the air drying step, the sheet 20 and substrate 10 can be dried by other methods. For example, a hot plate can be used such that the sheet 20 or substrate 10 is placed on the hot plate surface. The hot plate can be adjusted to a pre-determined drying temperature, e.g., in the range from about 75 to about 200° C, for example at least 80, 85, 90, 95, 100, 105, 110, 115, 120, 125, 130, 140, 150 or 160° C. The sheet 20 or substrate 10 can be in contact with the hot plate for a pre-determined period of time to dry the bonding surfaces, for example, for example at least about 10, 15, 20, 25 or 30 minutes or more. In another example, the sheet 20 and substrate 10 can be dried in a static or convection oven at the temperatures and times described above for the hot plate. Nitrogen can be utilized in place of air in the drying process as desired.

In an example, the sheet 20, substrate 10, or both can be dried for a period of at least 15 or 30 minutes at a temperature of at least 85° C to dry the bonding surfaces 14, 24 prior to bonding the sheet 20 and substrate 10 together.

In another example, the drying temperature can be increased to at least 110° C for the at least 15 or 30 minute period. In a further example, the sheet and substrate are convectively dried, for example in a convection oven. After drying of the bonding surfaces 14, 24, the sheet and substrate can be bonded together. For instance, the sheet 20 and substrate 10 can be bonded together without additional steps or processes to treat the bonding surfaces prior to bonding them together after drying.

After bonding the sheet and substrate together, the article can optionally be further processed, for example in a pre-baking or -treatment step, to enhance bonding. For example, the article can be treated by heating the article for a period of time. Heating can include subjecting the article to a temperature in the range of 50° C to 250° C, or 100° C, 150° C or 200° C for a period of 10 to 60 minutes, 20 to 40 minutes or 30 minutes. Heating can be accomplished in a static or convection oven at the temperatures and times described above or, alternatively, in other conventional devices, for example, hot plate or a furnace.

Surface Energy of the Surfactant Layer

The surfactant layer can provide a bonding surface with a surface energy in a range of from about 48 to about 75 mJ/m$^2$, as measured for one surface (including polar and dispersion components).

In general, the surface energy of the surfactant layer can be measured upon being applied or deposited. The surface energy of the as-deposited surfactant prior to any further surface activation step, is in the range of about 65 to about 74 mJ/m$^2$, or about 68 to about 72 mJ/m$^2$, or about 69, 70 or 71 mJ/m$^2$, which provides a good self-propagating bond with a glass sheet, whereby production time to assemble articles is made reasonable and cost efficient. Both surface energy ranges (as-deposited meaning after applying surfactant) can also be effective to control bonding at high temperatures so as to prevent two articles from becoming permanently bonded to one another. The surface energy of the surfactant layer surface is measured indirectly by measuring the static contact angles of three liquids - water, diiodomethane and hexadecane - individually deposited on the solid surface in air. Surface energies as disclosed herein were determined according to the Wu model, as set forth below. (See: S. Wu, J. Polym. Sci. C, 34, 19, 1971). In the Wu model, the surface energies, including total, polar, and dispersion components, are measured by fitting a theoretical model to three contact angles of three test liquids: water, diiodomethane and hexadecane. From the contact angle values of the three liquids, a regression analysis is done to calculate the polar and dispersion components of the solid surface energy. The theoretical model used to calculate the surface energy values includes the following three independent equations relating the three contact angle values of the three liquids and the dispersion and polar components of surface energies of the solid surface (denoted by the subscript "S") as well as the three test liquids:

$$\gamma_W \left(1 + \cos \theta_W\right) = 4 \left( \frac{\gamma_W^d \gamma_S^d}{\gamma_W^d + \gamma_S^d} + \frac{\gamma_W^p \gamma_S^p}{\gamma_W^p + \gamma_S^p} \right) \qquad (1)$$

$$\gamma_D \left(1 + \cos \theta_D\right) = 4 \left( \frac{\gamma_D^d \gamma_S^d}{\gamma_D^d + \gamma_S^d} + \frac{\gamma_D^p \gamma_S^p}{\gamma_D^p + \gamma_S^p} \right) \qquad (2)$$

$$\gamma_H \left(1 + \cos \theta_H\right) = 4 \left( \frac{\gamma_H^d \gamma_S^d}{\gamma_H^d + \gamma_S^d} + \frac{\gamma_H^p \gamma_S^p}{\gamma_H^p + \gamma_S^p} \right) \qquad (3)$$

where, the subscripts "W", "D" and "H" represent water, diiodomethane and hexadecane, respectively, and the superscripts "d" and "p" represent the dispersion and polar components of surface energies, respectively. Since diiodomethane and hexadecane are essentially non-polar liquids, the above set of equations reduces to:

$$\gamma_W \left(1 + \cos \theta_W\right) = 4 \left( \frac{\gamma_W^d \gamma_S^d}{\gamma_W^d + \gamma_S^d} + \frac{\gamma_W^p \gamma_S^p}{\gamma_W^p + \gamma_S^p} \right) \qquad (4)$$

$$\gamma_D \left(1 + \cos \theta_D\right) = 4 \left( \frac{\gamma_D^d \gamma_S^d}{\gamma_D^d + \gamma_S^d} \right) \qquad (5)$$

$$\gamma_H \left(1 + \cos \theta_H\right) = 4 \left(\frac{\gamma_H^d \gamma_S^d}{\gamma_H^d + \gamma_S^d}\right) \qquad (6)$$

From the above set of three equations (4-6), the two unknown parameters, dispersion and polar surface energy components of the solid surface, $\gamma_S^d$ and $\gamma_S^p$, can be calculated by regression analysis. However, with this approach, there is a limiting maximum value up to which the surface energy of the solid surface could be measured. That limiting maximum value is the surface tension of water, which is about 73 mJ/m$^2$. If the surface energy of the solid surface is appreciably greater than the surface tension of water, the surface will be fully wetted by water, thereby causing the contact angle to approach zero. Beyond this value of surface energy, therefore, all calculated surface energy values would correspond to about 73-75 mJ/m$^2$ regardless of the real surface energy value. For example, if the real surface energies of two solid surfaces are 75 mJ/m$^2$ and 150 mJ/m$^2$, the calculated values using the liquid contact angles will be about 75 mJ/m$^2$ for both surfaces.

Accordingly, all contact angles disclosed herein are measured by placing liquid droplets on the solid surface in air and measuring the angle between the solid surface and the liquid-air interface at the contact line. Therefore, when a claim is made on the surface energy value being from 55 mJ/m$^2$ to 75 mJ/m$^2$ it should be understood that these values correspond to calculated surface energy values based on the method described above and not the real surface energy values, which could be greater than 75 mJ/m$^2$ when the calculated value approaches the real surface energy value.

Bonding Energy of the Sheet to the Substrate

In general, the energy of adhesion (i.e., bond energy) between two surfaces can be measured by a double cantilever beam method or wedge test. The tests simulate in a qualitative manner the forces and effects on an adhesive bond joint at a modification layer/first sheet interface. Wedge tests are commonly used for measuring bonding energy. For example, ASTM D5041, Standard Test Method for Fracture Strength in Cleavage of Adhesives in Bonded Joints, and ASTM D3762, Standard Test Method for Adhesive-Bonded Surface Durability of Aluminum, are standard test methods for measuring bonding of substrates with a wedge. Also, for example, one method of using a wedge test to measure bond strength is set forth in US62/201,245, filed on August 5, 2015; this test was used to measure the bond energies discussed herein.

A summary of the test method includes recording the temperature and relative humidity under which the testing is conducted, for example, the temperature and relative humidity in a lab room. The sheet is gently separated at a corner of the glass article locally to break the bond between the sheet 20 and the substrate 10. A sharp razor can be used to initiate local separation of the sheet from the substrate, for example, a GEM brand razor with a thickness of 228 ± 20 microns. In forming the initial local separation, momentary sustained pressure may be needed to fatigue the bond. A flat razor having the aluminum tab removed can be slowly inserted between the sheet and the substrate until the separation front (line demarcating an area of separation between the thin sheet and substrate from an area wherein the thin sheet and substrate remain bonded to one another) can be observed to propagate such that the separation increases. The flat razor does not need to be inserted significantly to induce a local separation. Once a local separation is formed, the glass article is permitted to rest for at least 5 minutes to allow the local separation to stabilize. Longer rest times may be needed for high humidity environments, for example, above 50% relative humidity.

The glass article with the developed local separation is evaluated with a microscope to record the local separation length. The local separation length is measured from the end separation point of the sheet from the substrate (i.e. furthest separation point from the tip of razor) and the closest non-tapered portion of the razor. The local separation length is recorded and used in the following equation to calculate bond energy.

$$\gamma = 3t_b^2 E_1 t_{w1}^3 E_2 t_{w2}^3 \,/\, 16L^4 (E_1 t_{w1}^3 + E_2 t_{w2}^3)$$

wherein $\gamma$ represents the bond energy, $t_b$ represents the thickness of the blade, razor or wedge, $E_1$ represents the Young's modulus of the sheet 20 (e.g., thin glass sheet), $t_{w1}$ represents the thickness of the sheet, $E_2$ represents the Young's modulus of the substrate 10 (e.g., a glass carrier), $t_{w2}$ represents the thickness of the substrate 10 and L represents the local separation length between the sheet 20 and substrate 10 upon insertion of the blade, razor or wedge as described above.

The bond energy is understood to behave as in silicon wafer bonding, where an initially hydrogen bonded pair of wafers (not treated as described herein) are heated to convert much or all the silanol-silanol hydrogen bonds to Si--O--Si covalent bonds. While the initial room temperature hydrogen bonding produces bond energies of the order of about 100-200 mJ/m$^2$, which allows separation of the bonded surfaces, a fully covalently bonded wafer pair as achieved during high temperature processing (on the order of 400 to 800° C) has adhesion energy of about 2000-3000 mJ/m$^2$ which does not allow separation of the bonded surfaces; instead, the two wafers act as a monolith. On the other hand, if both the surfaces are perfectly coated with a low surface energy material, for example a fluoropolymer, with thickness large enough to shield the effect of the underlying substrate, the adhesion energy would be that of the coating material, and would be very low, leading to low or no adhesion between the bonding surfaces 14, 24. Accordingly, the sheet 20 would not be able to be processed on substrate 10. Consider two extreme cases: (a) two SC1 cleaned glass surfaces saturated with silanol groups bonded together at room temperature via hydrogen bonding (whereby the adhesion energy is about 100-200 mJ/m$^2$) followed by heating to a temperature that converts the silanol groups to covalent Si--O--Si bonds (whereby the adhesion energy becomes 2000-3000 mJ/m$^2$). This latter adhesion energy is too high for the pair of glass surfaces to be detachable without breaking either of the surfaces into two or more piece, i.e., the bond is permanent; and (b) two glass surfaces perfectly coated with a fluoropolymer with low surface adhesion energy (about 12-20 mJ/m$^2$ per surface) bonded at room temperature and heated to high temperature. In this latter case (b), not only do the surfaces not bond at low temperature (because the total adhesion energy of about 24 - 40 mJ/m$^2$, when the surfaces are put together, is too low), they do not bond at high temperature either as there are too few polar reacting groups. Between these two extremes, a range of adhesion energies exist, for example between about 50 to about 1000 mJ/m$^2$, which can produce the desired degree of controlled bonding. Accordingly, the inventors have found various methods of treating the bonding surfaces 14, 24 leading to a bonding energy that is between about 50 to about 1000 mJ/m$^2$, and such that there can be produced a controlled bonding sufficient to maintain a pair of glass substrates (for example a glass carrier 10 and a thin glass sheet 20) bonded to one another through the rigors of flat panel display processing but also of a degree that (even after high temperature processing of, e.g. $\geq$ 300° C to 500° C) allows the detachment of sheet 20 from substrate 10 after processing is complete. Moreover, the detachment of the sheet 20 from substrate 10 can be performed by mechanical forces, and in such a manner that there is no significant damage to at least sheet 20, and preferably also so that there is no significant damage to substrate 10.

An appropriate bonding energy can be achieved by using select surfactants, i.e., a surfactant solution treatment of the surfaces prior to bonding. The appropriate bonding energy may be attained by the choice of one or more surfactant modifiers of either one or both of bonding surface 14 and bonding surface 24, which surfactants control the van der Waal (and/or hydrogen bonding, as these terms are used interchangeably throughout the specification) adhesion energy resulting from high temperature processing (e.g., on the order of $\geq$ 300° C to 500° C).

Outgassing of the Surfactant Layer

Polymer adhesives used in typical wafer bonding applications are generally 10-100 $\mu$m thick and lose about 5% of their mass at or near their temperature limit, which can generate increased contamination is processing equipment as compared to thinner layers having reduced material and outgassing. For such thicker materials, evolved from thick polymer films, it is easy to quantify the amount of mass loss, or outgassing, by mass-spectrometry. On the other hand, it is more challenging to measure the outgassing from thin surface treatments that are on the order of about 10 to about 100 nm thick or less, for example the surfactant residue or layers described above that desirably generate reduced outgassing and produce less contamination of processing equipment. For such materials, mass-spectrometry is not sensitive enough. There are a number of other ways to measure outgassing, however.

TEST #1 of measuring small amounts of outgassing is based on an assembled article, i.e., one in which a thin glass sheet is bonded to a glass carrier via a surfactant layer to be tested, and uses a change in percent bubble or bubble area to determine outgassing. During heating of the glass article, bubbles formed between the carrier and the thin sheet that indicate outgassing of the surfactant layer. The outgassing under the thin sheet may be limited by strong adhesion between the thin sheet and carrier. Nonetheless, layers $\leq$ 10 nm thick (surfactant residue, for example) may still create bubbles during thermal treatment, despite their smaller absolute mass loss. And the creation of bubbles between the thin sheet and carrier may cause problems with pattern generation, photolithography processing, and/or alignment during device processing onto the thin sheet. Additionally, bubbling at the boundary of the bonded area between the thin sheet and the carrier may cause problems with process fluids from one process entering a bubble in that one process, and leaving the bubble in a downstream process thus contaminating that downstream process. A change in percent bubble area of $\geq$ 10 or $\geq$ 5 is significant, indicative of outgassing, and is not desirable. On the other hand a change in percent bubble area of $\leq$ 3 or $\leq$ 1 is insignificant and an indication that there has been no outgassing.

The average bubble area of bonded glass sheets in a class 1000 clean room with manual bonding is about 1%. The percent of bubbles in bonded sheets is a function of cleanliness of the first sheet, the second sheet, and surface preparation. Because these initial defects act as nucleation sites for bubble growth after heat treatment, any change in bubble area upon heat treatment less than about 1% is within the variability of sample preparation. To carry out this test, a commercially available desktop scanner with transparency unit (Epson Expression 10000XL Photo) was used to make a first scan image of the area bonding the first sheet and the second sheet immediately after bonding. The articles were scanned using the standard Epson software using 508 dpi (50 $\mu$m/pixel) and 24 bit RGB. The image processing software first prepares an image by stitching, as necessary, images of different sections of a sample into a single image and removing scanner artifacts (by using a calibration reference scan performed without a sample in the scanner). The bonded area is then analyzed using standard image processing techniques, for example thresholding, hole filling, erosion/dilation, and blob analysis. The Epson Expression 11000XL Photo may also be used in a similar manner. In transmission mode, bubbles in the bonding area are visible in the scanned image and a value for bubble area can be determined. Then, the bubble area is compared to the total bonding area (i.e., the total overlap area between the thin sheet and the carrier) to calculate a percent area of the bubbles in the bonding area relative to the total bonding area. The samples are then heat treated in a MPT-RTP600s Rapid Thermal Processing system, available from Modular Process Technology (MPT, with offices in San Jose, CA) under $N_2$ atmosphere at test-limit temperatures of 300 °C, 400 °C, and 500 °C, for up to 10 minutes. Specifically, the time-temperature cycle carried out included: inserting the article into the heating chamber at room temperature and atmospheric pressure; the chamber was then heated to the test-limit temperature at a rate of 9 °C per minute; the chamber was held at the test-limit temperature for 10 minutes; the chamber was then cooled at furnace rate over about 1 minute to about 200° C; the article was removed from the chamber and allowed to cool to room temperature; the article was then scanned a second time with the optical scanner. The percent bubble area from the second scan was then calculated as above and compared with the percent bubble area from the first scan to determine a change in percent bubble area. As noted above, a change in bubble area of $\geq$ 5 to 10% is significant and an indication of outgassing. A change in percent bubble area was selected as the measurement criterion because of the variability in original percent bubble area. That is, most coating layers have a bubble area of about 2% in the first scan due to handling and cleanliness after the thin sheet and carrier have been prepared and before they are bonded. However, variations may occur between materials.

The percent bubble area measured, as exemplified by the change in percent bubble area, can also be characterized as the percent of total surface area of the surfactant layer bonding surface not in contact with the first sheet bonding surface. As described above, the percent of total surface area of the surfactant bonding surface not in contact with the first sheet is desirably less than 10%, less than 5%, less than 3%, less than 1% and up to less than 0.5% after the glass article is subjected to a temperature cycle by heating in a chamber cycled from room temperature to 300 °C, 370 °C, 400 °C, and up to 500 °C, including any ranges and subranges therebetween, at a rate 9 °C per minute and then held at the test temperature for 10 minutes before cooling the chamber to about 200° C in about 1 minute and removing the article from the chamber and allowing the glass article to cool to room temperature. The surfactant layer described herein allows the first sheet to be separated from the second sheet without breaking the first sheet into two or more pieces after the glass article is subjected to the above temperature cycling and thermal testing.

The following testing was carried out to evaluate the likelihood that a particular bonding surface preparation and surfactant presence would allow a sheet 20 to remain bonded to a substrate 10 throughout higher temperature processing, while allowing the thin sheet 20 to be removed from the substrate 10 (without damaging the sheet 20 and/or the substrate 10) after such processing (including processing at temperatures $\geq$ 300° C to 550° C). Thin glass was observed to bond very well to surfactant treated bonding surfaces with a very high bond speed consistent with high surface energy. And high bond speed has a manufacturing advantage of reducing the overall processing time, and/or increasing the throughput, to produce article 1. Thus, initial surface energies that promote rapid bond speeds are advantageous.

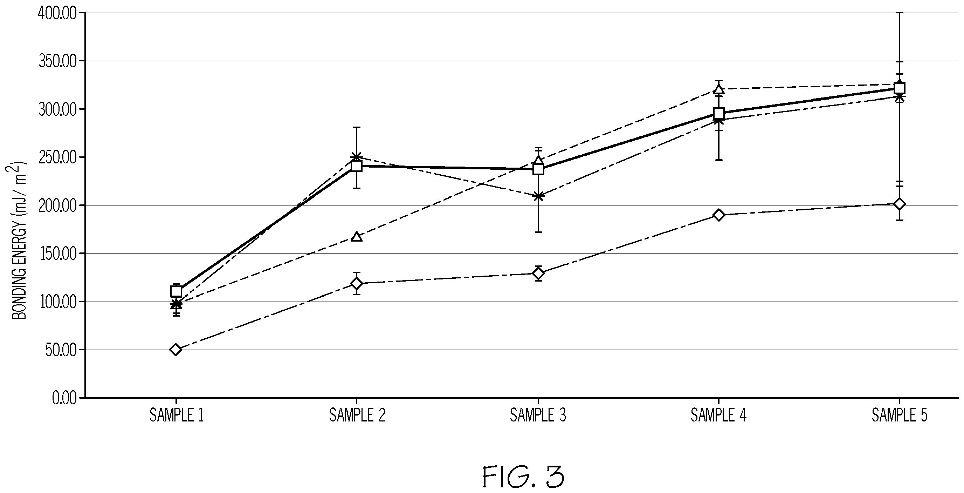

FIG. 3 shows the evolution of bond energy for thin glass sheets having a thickness of 100 um bonded to Corning® Eagle XG® carriers having a thickness of 500 um treated with surfactant. To treat the carriers with surfactant, and bond them to the thin glass sheets, the following procedure was used. Step1: the thin glass sheet and carrier are washed with detergent/surfactant at room temperature with ultrasonication (40K Hz) for 10 min. Step2: both the thin glass sheet and carrier are rinsed with DI water by quick-dump-rinse process 3 times. Step3: both the thin glass sheet and carrier are placed into an oven and heated at a temperature of 110 degrees C until dry, about 15~20 min. Step4: after cooling down the thin glass sheet and carrier samples, the thin glass sheet is placed on and thus bonded to the carrier. The bond energy ($mJ/m^2$) of thin glass bonded with a carrier rises from about 100 $mJ/m^2$ or less at room temperature (sample 1) to less than about 350 $mJ/m^2$ when heated at 300° C. For example, the diamond marked data points show that a thin glass sheet and carrier both treated with Versa-Clean™ by Fisherbrand are debondable and have a bond energy of less than 350 $mJ/m^2$ after the glass article was subject to the following conditions: 200° C for 1 hour in air (sample 2); 200° C for 1 hour in air and aged for 30 days at 60° C (sample 3); 200° C for 1 hour in air, followed by 300° C for 2 hours in air and aged for 30 days at 60° C (sample 4); and 200° C for 1 hour in air, followed by 300° C for 2 hours in air, aged for 30 days at 60° C and then an additional heat treatment at 300° C for 2 hours in air (sample 5). Similar data points are shown for the same four conditions for other glass articles. The square data points represent a glass article made from the thin glass sheet that was cleaned by SC1 and a carrier treated with Versa-Clean™ by Fisherbrand. The triangle data points represent a glass article made from a thin glass sheet and carrier both treated with SEMICLEAN KG™ whereas the "×" data points represent a glass article made from a thin glass sheet that was cleaned by SC1 and a carrier treated with SEMICLEAN KG™.

In another example, the bond energy ($mJ/m^2$) of thin glass bonded with a carrier rises from about 135 $mJ/m^2$

at room temperature to less than about 800 mJ/m$^2$ when heated at 300° C. Sixteen samples of Gen 2 size (370 × 470 × 1.1 mm) Corning® Eagle XG® carrier substrates were cleaned with SEMICLEAN KG™ in the same manner as described above. Sixteen thin Corning® Willow® Glass sheets (each 340 × 440 × 0.1 mm) were respectively bonded to the sixteen carrier samples to form sixteen glass articles. Before heating the glass articles, the average bonding energy was 135 mJ/m$^2$ at room temperature. Eight of the glass articles were subjected to heating at 200° C for 30 minutes in air and the remaining eight articles were subjected to heating at 300° C for 30 minutes in air. The average bonding energy for the samples heated at 200° C was 575 mJ/m$^2$ and the average bonding energy for the samples heated at 300° C was 735 mJ/m$^2$. All of the samples were debonded to remove the thin glass from the carrier without damaging or breaking the thin glass sheet. To debond the thin glass from the carrier, a metal blade was inserted at the interface between the thin glass sheet and carrier, at a corner thereof. Alternatively, or in addition, tape could be used to grab hold of one or more of the thin glass and the carrier to facilitate peeling after the blade has been inserted into the interface. Of course, in other examples, a suction stage could be used to suck the thin glass sheet and carrier from both sides and then to separate two substrates under a controllable separation speed.

In yet another example, thin Corning® Willow® Glass (0.2 mm thick) was bonded to a Corning® Eagle XG® carrier (0.4 mm thick) to form a glass article. Prior to bonding, the thin glass and carrier were cleaned with Versa-Clean™ by Fisherbrand and then washed with DI water and dried at 110° C for 20 minutes in a convection oven. The glass article was subjected to a thermal treatment at 450° C for one hour in air. The thin glass was debonded (in the same manner as described above) from the carrier glass without damaging or breaking the thin glass sheet. Additional thin Willow glass (0.2 mm thick) sheets were bonded to the used carrier to simulate repeated use of a carrier during manufacturing. In total, the carrier was bonded to thin Willow glass nine additional times and each glass article was subjected to thermal treatment at 450° C for one hour in air. The thin glass sheets were debonded from the carrier glass, in the manner discussed above, without damaging or breaking each of the additional nine thin glass sheets.

As shown by examples described above, the surfactant treatment of the bonding surface of the sheet, substrate, or both consistently maintains a bond energy less than about 800, 600, 500, 450, 400 or 350 mJ/m$^2$ between the glass sheet and substrate up to at least 500° C, e.g., after holding the glass article at about 200 to about 450° C for about 30 minutes to about 2 hours in an air atmosphere and optionally after aging it for a period of about 30 days at about 60° C.

In another example, Corning® Eagle XG® substrate (0.5 mm thick) was cleaned by SC1 and dried. Some substrate samples were further cleaned with 10% concentration Versa-Clean™ by Fisherbrand (10% coconut diethanolamide) at room temperature for 10 minutes with ultrasonification, and then the samples were subjected to a quick dump rinse in DI water. Another sample was cleaned with 0.5% SEMICLEAN KG™ (0.5% 4-nonylphenyl-polyethylene glycol) at room temperature for 10 minutes with ultrasonification, and then subjected to a quick dump rinse in DI water. Table 1 below shows the measured surface energy (mJ/m$^2$) of the substrate samples after holding the substrates in a convection oven for a period of 15 minutes at 110° C.

Table 1

| Sample | Pre-clean | Wash | Quick dump rinse | Drying | Surface Energy (mJ/m$^2$) |
|---|---|---|---|---|---|
| 1 | SC1 | None | None | Oven, 110° C, 15 mins | 75.57 |
| 2 | SC1 | 10% Versa-Clean™ | None | Oven, 110° C, 15 mins | 69.46 |
| 3 | SC1 | 10% Versa-Clean™ | 1 time | Oven, 110° C, 15 mins | 69.79 |
| 4 | SC1 | 10% Versa-Clean™ | 2 times | Oven, 110° C, 15 mins | 69.2 |
| 5 | SC1 | 10% Versa-Clean™ | 3 times | Oven, 110° C, 15 mins | 71.26 |
| 6 | SC1 | 0.5% SEMICLEAN KG™ | 3 times | Oven, 110° C, 20 mins | 70.02 |

The substrate samples exhibit surface energies above 69 mJ/m2, which indicates the presence of bonding surfaces for sufficient bonding with a glass surface. Multiple quick dump rinses with DI water do not show an significant change in surface energy for the substrates cleaned with 10% concentration Versa-Clean™. Table 1 shows that the as-deposited surface energy of a surfactant bonding surface on a substrate can be in the range of about 69 to 72 mJ/m$^2$.

In a further example, Corning® Eagle XG® substrates (0.5 mm thick) and Corning® Willow® Glass (0.1 mm thick) sheets were cleaned by SC1 and dried. The substrate and sheet samples were further cleaned with 10% or 0.5% concentration Versa-Clean™ by Fisherbrand (10% or 0.5% coconut diethanolamide); or 0.5% SEMICLEAN KG™ (0.5% 4-nonylphenyl-polyethylene glycol) at room temperature for 10 minutes, and then the samples were subjected to a quick dump rinse in DI water. The samples were oven dried for 20 minutes and then the substrates and sheets were bonded together to form articles. Table 2 below shows the measured bonding energy (mJ/m$^2$) between the substrates and sheets of the articles after holding the articles in an oven for a period of 10, 30 and 120 minutes at temperatures in the range of 300 to 400° C.

Table 2

| Sample | Pre-clean | Wash | Quick dump rinse | Drying | Thermal Treatment | Bond Energy (mJ/m$^2$) |
|---|---|---|---|---|---|---|
| 10 | SC1 | 10% Versa-Clean™ | 1 time | Oven, 110° C, 20 mins | Oven, 300° C, 10 mins | 380.6 |
| 11 | SC1 | 10% Versa-Clean™ | 1 time | Oven, 110° C, 20 mins | Oven, 400° C, 10 mins | 462.6 |
| 12 | SC1 | 10% Versa-Clean™ | 2 times | Oven, 110° C, 20 mins | Oven, 300° C, 10 mins | 281 |
| 13 | SC1 | 10% Versa-Clean™ | 3 times | Oven, 110° C, 20 mins | Oven, 300° C, 10 mins | 336 |
| 14 | SC1 | 10% Versa-Clean™ | 3 times | Oven, 110° C, 20 mins | Oven, 300° C, 10 mins | 255 |
| 15 | SC1 | 10% Versa-Clean™ | 3 times | Oven, 110° C, 20 mins | Oven, 400° C, 10 mins | 277 |
| 16 | SC1 | 10% Versa-Clean™ | 3 times | Oven, 110° C, 20 mins | Oven, 500° C, 10 mins | 350 |
| 17 | SC1 | 0.5% Versa-Clean™ | 3 times | Oven, 110° C, 20 mins | Oven, 350° C, 120 mins | 95.82 |
| 18 | SC1 | 0.5% Versa-Clean™ | 3 times | Oven, 110° C, 20 mins | Oven, 350° C, 120 mins | 109.01 |
| 19 | SC1 | 0.5% Versa-Clean™ | 3 times | Oven, 110° C, 20 mins | Oven, 370° C, 30 mins | 95.82 |
| 20 | SC1 | 0.5% Versa-Clean™ | 3 times | Oven, 110° C, 20 mins | Oven, 370° C, 30 mins | 223.11 |
| 21 | SC1 | 0.5% SEMICLEAN KG™ | 3 times | Oven, 110° C, 20 mins | Oven, 350° C, 120 mins | 241.5 |
| 22 | SC1 | 0.5% SEMICLEAN KG™ | 3 times | Oven, 110° C, 20 mins | Oven, 350° C, 120 mins | 284.34 |
| 23 | SC1 | 0.5% SEMICLEAN KG™ | 3 times | Oven, 110° C, 20 mins | Oven, 370° C, 30 mins | 261.83 |
| 24 | SC1 | 0.5% SEMICLEAN KG™ | 3 times | Oven, 110° C, 20 mins | Oven, 370° C, 30 mins | 261.83 |

As shown by Table 2 above, the surfactant treatment of the bonding surfaces of the sheets and substrates consistently maintains a bond energy less than about 500, 400, 350, 300, 250, or 200 mJ/m$^2$ between the glass sheet and substrate up to at least 500° C, e.g., after holding the glass article in an oven at about 300 to about 500° C for at least 10 minutes, about 30 minutes or about 120 minutes in an air atmosphere.

For samples 17 through 24 of Table 2, the percent change in bubble area was measured. As-deposited surfactant in the articles exhibited a change in bubble area as follows: sample 17 - 2.2%; sample 18 - 1.7%; sample 19 - 3%; sample 20 - 1.5%; sample 21 - 0.5%, sample 22 - 0%; sample 23 - 1.2% and sample 24 - 0.6% after holding the glass article in an oven at a temperature of 350° C to 370° C for 30 to 120 minutes in an air atmosphere, which is consistent with minimal to no outgassing. Bubble area was determined using TEST #1. As can be seen, the percent change in bubble area is well below 5% and this surfactant application is useful for bonding glass substrates and sheets up to a temperature of at least about 400 °C.

In another example, Corning® Gorilla® substrates (2.6 mm thick) and Corning® Gorilla® Glass (0.55 mm thick) sheets were cleaned by SC1 and dried. The substrate and sheet samples were further cleaned with 5% concentration Versa-Clean™ by Fisherbrand (5% coconut diethanolamide) at room temperature for 10 minutes, and then the samples were subjected to a quick dump rinse in DI water. The samples were oven dried for 20 minutes and then the substrates and sheets were bonded together to form articles. The articles were subjected to a pre-treatment step in an oven for 15 minutes at a temperature of 200° C to enhance bonding. Table 3 below shows the measured bonding energy ($mJ/m^2$) between the substrates and sheets of the articles after holding the articles in an oven for a period of 20 minutes and 2.5 hours at temperatures of 270° C and 230° C, respectively.

Table 3

| Sample | Wash | Quick dump rinse | Drying | Pre-treatment | Thermal Treatment | Bond Energy ($mJ/m^2$) |
|---|---|---|---|---|---|---|
| 40 | 5% Versa-Clean™ | 3 times for both | Oven, 110° C, 20 mins | Oven, 200° C. 15 mins | Oven, 230° C, 2.5 hour | 195.2 |
| 41 | 5% Versa-Clean™ | 3 times for both | Oven, 110° C, 20 mins | Oven, 200° C. 15 mins | Oven, 230° C, 2.5 hour | 183.6 |
| 42 | 5% Versa-Clean™ | 3 times for both | Oven, 110° C, 20 mins | Oven, 200° C. 15 mins | Oven, 270° C, 20 mins | 230.1 |
| 43 | 5% Versa-Clean™ | 3 times for both | Oven, 110° C, 20 mins | Oven, 200° C. 15 mins | Oven, 270° C, 20 mins | 205.2 |
| 44 | 5% Versa-Clean™ | 3 times for both | Oven, 110° C, 20 mins | Oven, 200° C. 15 mins | Oven, 230° C, 2.5 hour | 218.5 |
| 45 | 5% Versa-Clean™ | 3 times for both | Oven, 110° C, 20 mins | Oven, 200° C. 15 mins | Oven, 270° C, 20 mins | 230.1 |
| 46 | 5% Versa-Clean™ | 3 times for sheet; 1 time for substrate | Oven, 110° C, 20 mins | Oven, 200° C. 15 mins | Oven, 230° C, 2.5 hour | 193.7 |
| 47 | 5% Versa-Clean™ | 3 times for sheet; 1 time for substrate | Oven, 110° C, 20 mins | Oven, 200° C. 15 mins | Oven, 270° C, 20 mins | 230.1 |

As shown by Table 3 above, the surfactant treatment of the bonding surfaces of the sheets and substrates consistently maintains a bond energy less than about 300, 275, 250, 230, 220, 210, 200, 195 or 190 $mJ/m^2$ between the glass sheet and substrate up to at least 300° C, e.g., after holding the glass article in an oven at about 230 to about 270° C for at least 20 minutes or about 2.5 hours in an air or nitrogen atmosphere. A pre-treatment step prior to holding the glass articles in the oven can enhance the bonding energy between the substrate and sheet and the pre-treatment step preferably includes heating the glass articles to a temperature in the range of 100° to 250° C, for example 200° C, and holding the article in this temperature range for a period of 10 to 30 minutes, for example 15 to 20 minutes. In an alternative method, the drying step and the pre-treatment step can be combined. For instance, the glass articles can be dried and pre-treated by heating the articles to a temperature in the range of 120° to 250° C, for example 200° C, and holding the article in this temperature range for a period of 20 to 60 minutes, for example 30 to 40 minutes.

The bonding surface preparation with a surfactant described herein provides an economical and efficient method for preparing sheets, substrates and glass articles. Further, because the articles can be debonded without fear of being permanently bonded together after at least 30 days, manufacturing and supply chains are benefited. The ability to debond a sheet from a substrate after the glass article has been stored for a period of time, for example, up to at least 30 days, provides flexibility in timing of future use of the sheet or substrate. Advantages of such storage time flexibility include easy inventory and processing adjustments and the ability to address increased or unexpected product needs by being able to accumulate a buffer stock of articles.

The inventors have further discovered that an article including a sheet and a substrate, suitable for high temperature processing, can be made by treating the sheet 20 and/or substrate 10 with a surfactant, for example, by bringing the sheet and/or substrate in contact with a surfactant solution and washing and drying the bonding surfaces. As described above, the surfactant can be deposited on the bonding surfaces by a washing step to achieve a debondable glass article. The residual surfactant left on the bonding surfaces achieves the desired bonding of the sheet 20 and the substrate 10, e.g., by having an atomic percent ratio of certain atoms, e.g., carbon, oxygen and silicon on the surface of the sheet and/or substrate. X-ray photoelectron spectroscopy (XPS) can be used to determine the surface composition of residual surfactant and bonding surface composition before bonding of the sheet and substrate. It is notable that XPS is a surface sensitive technique and the sampling depth is about several nanometers.

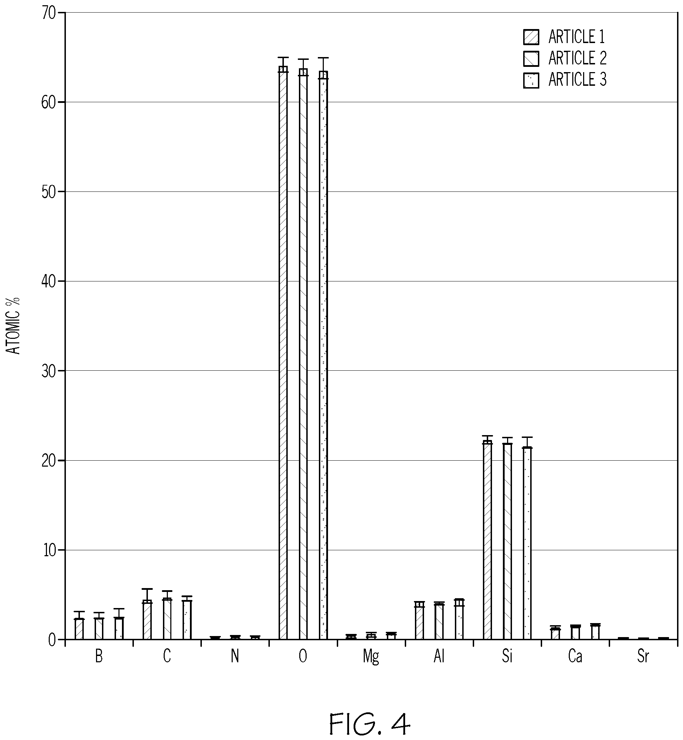

In an example, the atomic percent ratio of the bonding surface (e.g., 14, 24) before bonding and after drying of the bonding surface is shown FIG. 4. Surfactant was applied to Corning® Eagle XG® glass substrates having a thickness of 0.4 mm by washing (in the same manner as described above) the substrates in Versa-Clean detergent by Fisherbrand, which contains coconut diethanolamide and linear alcohol ethoxylate surfactant. The substrates were immersed in the detergent solution and subjected to ultrasonic energy. The substrates were removed and washed with a quick dump rinse with DI water three times and then convectively dried in an oven. One substrate was dried at 80° C for 15 minutes (article 1), one at 115° C for 15 minutes (article 2) and one at 140° C for 15 minutes (article 3). It is believed that other surfactants would produce similar results as shown and described herein.

As deposited on the bonding surfaces, the residual surfactant present on the bonding surfaces contains an atomic ratio of oxygen to silicon of about 2.8 or in the range of 2.5 to 3.5, an atomic ratio of silicon to carbon of about 4.5 or in the range of 4 to 5 and an atomic ratio of oxygen to carbon of about 12.8 or in the range of 12 to 14, wherein the atomic ratios between silicon, oxygen and carbon are measured from the substrate bonding surface of the substrate as dried and prior to the substrate being bonded with the sheet. As can be seen from FIG. 4, the surface composition did not change over the drying temperature range of 80° to 140° C.

For example, the materials and methods disclosed herein may be used to temporarily bond a cover glass substrate to a carrier (or holder) that is mounted in a sputtering (or other deposition method) chamber for depositing a coating onto the cover glass. By connecting the cover glass to a carrier, and then attaching the carrier into the deposition chamber, the mounting structure achieves less interference with the coating process, so that a more uniform coating may be deposited onto the cover glass. For example, the carrier may be attached to the deposition chamber wall with double sided adhesive tape or other fastening mechanisms. In the case of adhesive tape, though, the use of the carrier reduces (and in fact, can eliminates) the amount of adhesive residue that winds up on the useable article, i.e., the cover glass. After the coating process, the cover glass can be debonded from the carrier without any damage. The carrier can be reused after debonding the cover glass therefrom. In deposition processes, the carrier may be quite thick, for example equal to or greater than 1 millimeter.

## Claims

1. A glass article comprising:

   a glass substrate (10) comprising a substrate bonding surface (14);
   a glass sheet (20) comprising a sheet bonding surface (24); and
   a surfactant disposed between the substrate bonding surface (14) and the sheet bonding surface (24), the sheet bonding surface (24) being non-permanently bonded to the substrate bonding surface (14) such that the sheet (20) may be separated from the substrate (10) without breaking the sheet (20) into two or more pieces, and such that the separation bonding energy between the sheet bonding surface (24) and the substrate bonding surface (14) is less than 800 mJ/m$^2$ after the glass article is subjected to an aging period of 30 days at 60° C and then to a baking period of 2 hours at 300° C in air, wherein the surfactant comprises a compound selected from the group consisting of diethanolamide, coconut diethanolamide, polyethylene glycols, 4-nonylphenyl-polyethylene glycol, bisphenol A ethoxylate, octoxynol-9, oxtylphenol ethoxylate and mixtures thereof.

2. The glass article of claim 1, wherein the separation bonding energy between the sheet bonding surface (24) and the substrate bonding surface (14) is equal to or less than 600 mJ/m$^2$.

3. The glass article of claim 1 or claim 2, further comprising residue from a Standard Clean 1 cleaning process disposed between the substrate bonding surface (14) and the sheet bonding surface (24), wherein the substrate bonding surface (14) comprises an atomic ratio of oxygen to silicon in the range of 2.5 to 3.5, an atomic ratio of silicon to carbon in the range of 4 to 5 and an atomic ratio of oxygen to carbon in the range of 12 to 14, wherein the atomic ratios between silicon, oxygen and carbon are measured from the substrate bonding surface (14) of the substrate (10) as dried and prior to the substrate (10) being bonded with the sheet (20).

## Patentansprüche

1. Glasartikel, umfassend:

   einen Glasträger (10), umfassend eine Trägerverbindungsfläche (14);
   eine Glasscheibe (20), umfassend eine Scheibenverbindungsfläche (24); und

ein Tensid, das zwischen der Trägerverbindungsfläche (14) und der Scheibenverbindungsfläche (24) angeordnet ist, wobei die Scheibenverbindungsfläche (24) nicht-permanent mit der Trägerverbindungsfläche (14) verbunden ist, so dass die Scheibe (20) vom Träger (10) entfernt werden kann, ohne dass die Scheibe (20) in zwei oder mehr Stücke bricht, und so dass die Trennungsverbindungsenergie zwischen der Scheibenverbindungsfläche (24) und der Trägerverbindungsfläche (14) unter 800 mJ/m$^2$ ist, nachdem der Glasartikel einem Alterungszeitraum von 30 Tagen bei 60° C und anschließend einem Brennzeitraum von 2 Stunden bei 300° C in Luft unterzogen wurde, wobei das Tensid eine Verbindung umfasst, ausgewählt aus der Gruppe, bestehend aus Diethanolamid, Kokosnuss-Diethanolamid, Polyethylenglykole, 4-Nonylphenyl-polyethylenglykol, Bisphenol-A-Ethoxylat, Octoxynol-9, Oxtylphenolethoxylat und Gemischen daraus.

2. Glasartikel nach Anspruch 1, wobei die Trennungsverbindungsenergie zwischen der Scheibenverbindungsfläche (24) und der Trägerverbindungsfläche (14) kleiner oder gleich 600 mJ/m$^2$ ist.

3. Glasartikel nach Anspruch 1 oder Anspruch 2, ferner umfassend einen Rest aus einem Standardreinigung 1-Reinigungsprozess, der zwischen der Trägerverbindungsfläche (14) und der Scheibenverbindungsfläche (24) angeordnet ist, wobei die Trägerverbindungsfläche (14) ein Atomverhältnis von Sauerstoff zu Silizium im Bereich von 2,5 bis 3,5, ein Atomverhältnis von Silizium zu Kohlenstoff im Bereich von 4 zu 5 und ein Atomverhältnis von Sauerstoff zu Kohlenstoff im Bereich von 12 zu 14 aufweist, wobei die Atomverhältnisse zwischen Silizium, Sauerstoff und Kohlenstoff von der Trägerverbindungsfläche (14) des Trägers (10) in getrocknetem Zustand und vor der Verbindung des Trägers (10) mit der Scheibe (20) gemessen werden.

## Revendications

1. Article en verre comprenant :

un substrat de verre (10) comprenant une surface de liaison (14) de substrat ;
une feuille de verre (20) comprenant une surface de liaison (24) de feuille ; et
un agent tensioactif disposé entre la surface de liaison (14) de substrat et la surface de liaison (24) de feuille, la surface de liaison (24) de feuille étant liée de manière non permanente à la surface de liaison (14) de substrat de sorte que la feuille (20) puisse être séparée du substrat (10) sans rompre la feuille (20) en deux ou plusieurs morceaux, et de sorte que l'énergie de liaison de séparation entre la surface de liaison (24) de feuille et la surface de liaison (14) de substrat soit inférieure à 800 mJ/m$^2$ après que l'article en verre a été soumis à une période de vieillissement de 30 jours à 60°C, et ensuite à une période de cuisson de 2 heures à 300°C à l'air, ledit agent tensioactif comprenant un composé choisi dans le groupe constitué par le diéthanolamide, le diéthanolamide de noix de coco, des polyéthylènes glycols, du 4-nonylphényl-polyéthylène glycol, de l'éthoxylate de bisphénol A, de l'octoxynol-9, de l'éthoxylate d'oxtylphénol et des mélanges de ceux-ci.

2. Article en verre selon la revendication 1, ladite énergie de liaison de séparation entre la surface de liaison (24) de feuille et la surface de liaison (14) de substrat étant inférieure ou égale à 600 mJ/m$^2$.

3. Article en verre selon la revendication 1 ou 2, comprenant en outre un résidu provenant d'un processus de nettoyage de Norme Nettoyage 1 disposé entre la surface de liaison (14) de substrat et la surface de liaison (24) de feuille, ladite surface de liaison (14) de substrat comprenant un rapport atomique d'oxygène sur silicium dans la plage allant de 2,5 à 3,5, un rapport atomique de silicium sur carbone dans la plage allant de 4 à 5 et un rapport atomique d'oxygène sur carbone dans la plage allant de 12 à 14, lesdits rapports atomiques entre le silicium, l'oxygène et le carbone étant mesurés à partir de la surface de liaison (14) de substrat du substrat (10) sous forme séchée et avant que le substrat (10) ne soit lié à la feuille (20).

FIG.1

FIG.2

FIG. 3

EP 3 377 455 B1

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014137801 A1
- US 2015099100 A1

- US 62201245 B

**Non-patent literature cited in the description**

- **S. WU.** *J. Polym. Sci. C,* 1971, vol. 34, 19